(19) Europäisches Patentamt / European Patent Office / Office européen des brevets

(11) **EP 4 299 773 A1**

(12) **EUROPEAN PATENT APPLICATION**

(43) Date of publication:
**03.01.2024 Bulletin 2024/01**

(21) Application number: **22182104.4**

(22) Date of filing: **30.06.2022**

(51) International Patent Classification (IPC):
*C22B 1/00* (2006.01)    *C22B 3/02* (2006.01)
*C22B 3/44* (2006.01)    *C22B 7/00* (2006.01)
*C22B 47/00* (2006.01)    *H01M 10/54* (2006.01)

(52) Cooperative Patent Classification (CPC):
**C22B 7/007; C22B 1/005; C22B 3/02; C22B 3/44;
C22B 47/00; H01M 4/50; H01M 10/54**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fortum Oyj
02150 Espoo (FI)**

(72) Inventors:
• KAUPPINEN, Pasi
  02150 Espoo (FI)
• EKMAN, Peik
  02150 Espoo (FI)
• HAAPALA, Katja
  02150 Espoo (FI)

(74) Representative: **Laine IP Oy
Porkkalankatu 24
00180 Helsinki (FI)**

(54) **METHOD FOR PROCESSING MANGANESE CONTAINING MATERIAL**

(57) According to an example aspect of the present invention, there is provided a method for processing a manganese containing material comprising: a) leaching the manganese containing material using sulfuric acid and hydrogen peroxide to produce a first process solution comprising manganese sulfate, which first process solution is filtrated, b) measuring conductivity of the first process solution at a temperature, c) determining concentration of manganese based on the measured conductivity of the first process solution at the temperature, and a correlation between the conductivity and the concentration, d) dosing persulfate according to the determined manganese concentration to produce a second process solution, and to precipitate at least part of manganese oxide, and e) filtering the manganese oxide, to produce a manganese depleted process liquor.

FIG. 1

Processed by Luminess, 75001 PARIS (FR)

**Description**

FIELD

The present invention relates to a method for processing a manganese containing material, particularly to precipitation of manganese oxide using oxidation in hydrometallurgical processing of the manganese containing material. The present invention further relates to an apparatus for processing a manganese containing material.

BACKGROUND AND OBJECTS

Pure manganese is typically produced by a sulfuric acid leaching of ore followed by electrowinning, producing manganese dioxide. Roughly 80% of identified recoverable manganese resources are located in South Africa, with other notable deposits being found in Ukraine, Australia, India, China and Brazil. Additionally, the ocean floor is estimated to contain 500 billion tons of manganese nodules, which contains approximately 25% manganese.

Manganese is used in a wide variety of metallurgical applications in which it has no viable substitute. For example, manganese is used widely in both steel and aluminium alloys, in both alkaline and Li-ion batteries as well as in pigments for ceramics and glass.

Ammonium persulfate is a strong oxidizing agent commonly used in polymer chemistry, or as a standard ingredient in a hair bleach. Ammonium persulfate is produced from an acidic ammonium sulfate or ammonium bisulfate solution by electrolysis using high current density, typically using either a platinum or a boron doped diamond (BDD) anode. Other persulfates are monoprotic salts such as sodium, potassium or lithium persulfates.

Oxidative manganese precipitation using persulfate has been used in publications CN111092195 A and CN112897584 A to produce composite materials such as lithium-rich cathode materials or $Ag-TiO_2-MnO_2$ composites. In these publications, manganese content of feed material is well known and controlled by always feeding the same amount of manganese, thus persulfate dosing can be maintained as a constant. The reaction time is also thus always known and can be optimized for the process. These patents do not strive to follow manganese precipitation success rate, but rather to produce a manganese product.

In publication CN109668941 A, conductivity is used as an indicator of alkali addition amount in titration of sulfuric acid during an electrolytic manganese dioxide production. During electrolytic manganese production, manganese sulfate is subjected to electrolysis, producing a solid manganese oxide and sulfuric acid. By titration of the sulfuric acid, the degree of manganese recovery can be calculated. During the addition of alkali, conductivity is measured and using previous experimentally derived data, the amount added can be determined by comparing the values. This is not an online measurement and thus requires more work and has a longer lead time from sample taking to result.

In the precipitation processes, the manganese content can vary over a wide range depending on the raw material and the recipe used in the leaching steps prior to precipitation. For example, in recovering metals during lithium ion battery recycling, the manganese content varies depending on cathode chemistry of the lithium ion battery. An aim of the present invention is to provide a method for accurately measuring manganese content so that persulfate is not over- or under dosed. Furthermore, when varying amounts of manganese is precipitated, the reaction times can also be very different. A further aim of some embodiments of the present invention is to provide a method for determining manganese content accurately, on-line and quickly both before and after the process, but also during the process.

SUMMARY OF THE INVENTION

According to a first aspect of the present invention, there is provided a method for processing a manganese containing material comprising:

  a) leaching the manganese containing material using sulfuric acid and hydrogen peroxide to produce a first process solution comprising manganese sulfate, which first process solution is filtrated,
  b) measuring conductivity of the first process solution at a temperature,
  c) determining concentration of manganese based on the measured conductivity of the first process solution at the temperature, and a correlation between the conductivity and the concentration,
  d) dosing persulfate according to the determined manganese concentration to produce a second process solution, and to precipitate at least part of manganese oxide, and
  e) filtering the manganese oxide, to produce a manganese depleted process liquor.

According to a second aspect of the present invention, there is provided an apparatus for processing a manganese containing material, the apparatus comprising:

- a reactor for containing manganese containing material, sulfuric acid and hydrogen peroxide, configured to produce a first process solution comprising manganese sulfate,
- a conductivity measuring device configured to measure conductivity of the first process solution at a temperature,
- a computing unit configured to determine concentration of manganese based on the conductivity of the first process solution at the temperature, and a correlation between the conductivity and the concentration,
- a persulfate feeding pump configured to dose persulfate according to the determined manganese concentration to produce a second process solution, and to precipitate at least part of manganese oxide, and
- a filter configured to filter the manganese oxide.

BRIEF DESCRIPTION OF THE DRAWINGS

FIGURE 1 illustrates a method for processing a manganese containing material in accordance with a first embodiment;

FIGURE 2 illustrates a method for processing a manganese containing material in accordance with a second embodiment;

FIGURE 3 illustrates a method for processing a manganese containing material in accordance with a third embodiment;

FIGURE 4 illustrates a method for processing a manganese containing material in accordance with a fourth embodiment;

FIGURE 5 illustrates an apparatus for processing a manganese containing material in accordance with an embodiment; and

FIGURE 6 illustrates a typical conductivity against manganese concentration plot.

EMBODIMENTS

In the present context, the term "manganese containing material" refers to material which contains manganese. The manganese containing material can be for example a lithium-ion (Li-ion) electrode material or a black mass derived from Li-ion battery recycling. The Li-ion electrode material or the black mass can comprise varying amounts of manganese, as well as other metals, such as nickel, cobalt and lithium.

The present embodiments relate to precipitation of manganese from a sulfate media. It was found that conductivity directly relates to manganese concentration in a sulfate process solution: low conductivity values relate to higher manganese concentration and vice versa. Hence, conductivity of the sulfate process solution can accurately be used to determine the amount of manganese and the amount of persulfate dosing required to precipitate soluble manganese. The process can be followed online without expensive analytical equipment or downtime, and this allows ensuring that manganese has been fully precipitated before releasing the process solution for the subsequent stages in the process. By "fully" it is meant that at least 90 wt-% of manganese is precipitated, preferably at least 95 wt-%, more preferably at least 99 wt-% of manganese is precipitated.

According to an aspect, a method for processing a manganese containing material comprises:

a) leaching the manganese containing material using sulfuric acid and hydrogen peroxide to produce a first process solution comprising manganese sulfate, which first process solution is filtrated,
b) measuring conductivity of the first process solution at a temperature,
c) determining concentration of manganese based on the measured conductivity of the first process solution at the temperature, and a correlation between the conductivity and the concentration,
d) dosing persulfate according to the determined manganese concentration to produce a second process solution, and to precipitate at least part of manganese oxide, and
e) filtering the manganese oxide, to produce a manganese depleted process liquor.

The method enables following the process online without expensive analytical equipment or downtime. Further, the method ensures that manganese has been fully precipitated before releasing the process solution for subsequent stages in the process. The method optimizes reaction times, decreases risk of off-specification products and reduces operational expenditures by optimizing reagent amounts. Similarly, capital expenditure is reduced by using low-cost equipment and software instead of other expensive online analytical methods, such as X-Ray Fluorescence (XRF) or Inductively Coupled Plasma-Optical Emission Spectroscopy (ICP-OES).

In the step a), the manganese containing material, such as a lithium-ion (Li-ion) electrode material or a black mass, is dissolved in a sulfuric acid media. The manganese containing material can also comprise for example, nickel, cobalt and/or lithium, and other elements typically found in manganese processing. After dissolution, the manganese concentration in the sulphuric acid media is 0-15 g/l, preferably 1-10 g/l.

Alternatively, the manganese containing material can be processed by other kinds of hydrometallurgical processes, such as electrowinning or non-oxidative precipitations.

Measurement of conductivity of the first process solution in step b) can be performed by a conductivity measuring device, such as a conductivity electrode. The conductive electrode can be attached to a reactor containing the first process solution. The conductive electrode may be placed inside the reactor so that it is in contact with the first process solution. The conductive electrode provides a simple and low-cost way to measure conductivity on-line.

In step b), conductivity of the first process solution can be measured at a temperature of 15-90 °C, preferably 70-90 °C, more preferably 75-85 °C. Most preferably, conductivity is measured at the temperature of 70-90 °C, preferably 80 °C, because typically precipitation of manganese oxide is conducted at temperature 80 °C. However, conductivity can be also measured at a lower temperature. Conductivity changes by the temperature, so it is important to measure conductivity at or at least near the temperature in which the precipitation of manganese oxide is conducted. By "near" is meant that the temperature is in the range of +/- 5 °C of the target temperature.

In step c), the concentration of manganese can be determined by comparing conductivity of the first process solution to a database. The database has been constructed in advance by measuring conductivity of manganese solutions with known manganese content at a specific temperature, and plotting the conductivity as a function of manganese content at the specific temperature. Thus, when conductivity is measured on a solution with unknown manganese content, the concentration of manganese can be determined using the database.

The database can be constructed by determining conductivity and concentration values of process solution samples with known manganese content. Conductivity can be determined using a conductivity measuring device, such as a conductivity electrode. Concentration can be determined with an exact analytical method, such as XRF or ICP-OES. Then, by plotting conductivity of the process solution samples as a function of manganese concentration of these process solution samples and determining a slope and an intercept, the predictive database can be built. The database can be used to determine manganese concentrations during precipitation processes using only conductivity as an indicator. Using this method, persulfate dosing can be determined, and the process can be followed in real time, allowing for optimization of reagent use and reaction time. Hence, the database can be used online to determine persulfate dosing for each batch, and follow manganese concentration changes during precipitation.

The step d) can further comprise heating the first process solution to a temperature of 70-90°C, preferably 75-85°C, before dosing the persulfate, because precipitation of manganese oxide is typically conducted around temperature of 80 °C.

In step d), the required stochiometric amount of persulfate can be determined according to the chemical equation:

$$MnSO_4 + X_2S_2O_8 + H_2O \rightarrow MnO_2 + Li_2SO_4 + H_2SO_4 ,$$

where $X_2S_2O_8$ is persulfate.

The molar ratio of the persulfate to manganese sulfate can be 0.95-1.3:1, preferably 1-1.1:1.

The persulfate can be a monoprotic persulfate.

X in the persulfate $X_2S_2O_8$ can be Na, $NH_4$, K or Li. Thus, the persulfate can be sodium persulfate, ammonium persulfate, potassium persulfate or lithium persulfate.

In step d), the persulfate is added to a reactor. As the precipitation reaction is endothermic, it is recommended to follow temperature closely to ensure the reaction takes place in optimal conditions (70-90 °C).

Before addition of persulfate, conductivity is typically in the range of 3-8 mS/cm depending on manganese concentration. Once manganese sulfate has been fully precipitated as manganese oxide, conductivity increases to 9-11 mS/cm. Increased temperature decreases conductivity. After persulfate dosing, conductivity of the second process solution can be continuously measured and compared against the database. As soon as a desired conductivity is reached, the second process solution can be filtered to remove solid manganese oxide from the second process solution, and to produce a manganese depleted process solution. By "depleted" it is meant that at least 90 wt-% of manganese is precipitated, preferably at least 95 wt-%, more preferably at least 99 wt-% of manganese is precipitated.

The method can further comprise a step d') after the step d) in which steps b), c) and d) are repeated for precipitation of a third process solution, wherein the third process solution is obtained after precipitation of the second process solution. Step d') can be conducted if the desired conductivity is not reached after the persulfate dosing. Thus, step d') enables precipitating manganese sulfate present in the second process solution to manganese oxide after the persulfate dosing.

The second process solution can also be filtered to remove the solid manganese oxide to obtain the third process solution. So, optionally, the step e) can also be conducted before the step d'). Removing the solid manganese oxide is however not necessary, because the solid manganese oxide does not have a significant effect on the conductivity of the third process solution.

The method can further comprise a step f) for determining, with an analytical method, the manganese concentration of the solution obtained after precipitation and filtering. Thus, the analytical method, such as XRF or ICP-OES, can be used to double check manganese concentration in the second or the third process solution. Step f) can thus ensure that all manganese is precipitated as manganese oxide.

The method comprising the step f) can further comprise improving the determination of concentration of the manganese with the manganese concentration determined with the online analytical method. So, the values determined with the online analytical method can be added to the database to gather more data on concentration of manganese at a given conductivity.

The database can be constructed to take into consideration the effect of other elements present in solution. For example, the manganese containing material can also comprise nickel, cobalt and lithium. The database comprises measured conductivities and corresponding manganese concentrations and different manganese concentrations. Using this data, slope and intercept is calculated. Using the following equation, manganese concentration can be then determined by inputting conductivity:

$$[Mn] = (Conductivity\text{-}SLOPE)/INTERCEPT$$

The concentration of manganese can be determined by comparing conductivity of the first process solution to a database. The database has been constructed in advance by measuring conductivity of manganese containing process solutions with known manganese content at a specific temperature, and plotting the conductivity as a function of manganese content at the specific temperature. Thus, when conductivity is measured on a solution with unknown manganese content, the concentration of manganese can be determined using the database.

The method can further comprise a step g) for releasing the process solution to a next step, when conductivity of the solution obtained after precipitation and filtering reaches a threshold. So, as soon as the desired conductivity is reached, the process solution can be released to the next step and the reactor can be filled with a new batch of the manganese containing material.

The threshold can be for example, above 9.5 mS/cm, preferably 9.5-12 mS/cm, more preferably 9.5-11 mS/cm. The threshold may be different depending on the raw material and process parameters.

According to another aspect, an apparatus for processing a manganese containing material comprises:

- a reactor for, containing manganese containing material, sulfuric acid and hydrogen peroxide, configured to produce a first process solution comprising manganese sulfate,
- a conductivity measuring device configured to measure conductivity of the first process solution at a temperature,
- a computing unit configured to determine concentration of manganese based on the conductivity of the first process solution at the temperature, and a correlation between the conductivity and the concentration,
- a persulfate feeding pump configured to dose persulfate according to the determined manganese concentration to produce a second process solution, and to precipitate at least part of manganese oxide, and
- a filter configured to filter the manganese oxide.

The apparatus enables to determine manganese concentration and thus a required persulfate dose to precipitate manganese as manganese oxide. The apparatus enables following the process online without expensive analytical equipment or downtime thanks to a simple and low-cost conductivity measuring device and a determination conducted by the computing unit. Further, the apparatus ensures with an aid of the conductivity measuring device and the computing unit that manganese has been fully precipitated before releasing the process solution for subsequent stages in the process. The apparatus thus optimizes reaction times, decreases risk of off-specification products and reduces operational expenditures by optimizing reagent amounts. Similarly, capital expenditure is reduced due to a low-cost equipment and software instead of other expensive online analytical methods, such as XRF or ICP-OES.

The reactor can comprise for example, a heating device and a mixing means for producing the first process solution.

Further, the reactor can comprise a valve for releasing the process solution to a next step.

The conductivity measuring device is configured to measure conductivity of the first process solution. The conductivity measuring device can be for example, a conductivity electrode.

The conductivity measuring device may either comprise a computing unit that is able to determine concentration of manganese based on the conductivity of the first process solution, or it may comprise a transmitter configured to transmit information to an external device for processing. The device may also comprise both a computing unit and a transmitter. It is also possible that the device comprises a processing unit for controlling the parts of the device, but which does not carry out the determination itself. In case the device comprises a computing unit configured to determine concentration of manganese based on the conductivity of the first process solution, it typically also comprises or is connected to a database comprising data on concentration of manganese at a given conductivity. In addition to or instead of the database, the computing unit can apply an equation or a slope determined by the conductivity measurements for determining concentration of manganese at a given conductivity. The determination of the concentration of manganese is thus based on comparison of the measured conductivity and concentration of manganese, where the conductivity is measured by the conductivity measuring device. The device may thus further comprise or be connected to a database comprising data on concentration of manganese at a given conductivity.

In case the determination of the concentration of manganese based on the conductivity of the first process solution is carried out at the device itself, it may still comprise a transmitter for transmitting the results of the determination to an outside location.

The computing unit can be configured to calculate required persulfate amount using the database and control persulfate feeding pump accordingly to feed persulfate to the first process solution to form a second process solution, and to precipitate at least part of manganese oxide.

The computing unit can be configured to give a command to the valve of the reactor for releasing the process solution to a next step, when conductivity of the solution obtained after precipitation and filtering reaches a threshold. So, as soon as the desired conductivity is reached, the process solution can be released to the next step and the reactor can be filled with a new batch of the manganese containing material.

DETAILED DESCRIPTION OF THE DRAWINGS

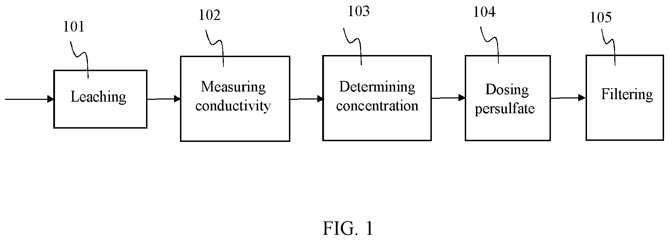

FIGURE 1 illustrates a method for processing a manganese containing material in accordance with a first embodiment. In a step a), the manganese containing materials is leached 101 using sulfuric acid and hydrogen peroxide to produce a first process solution comprising manganese sulfate, which first process solution is filtrated. In a step b), conductivity of the first process solution is measured 102. In a step c), concentration of manganese based on the conductivity of the first process solution is determined 103. In a step d), persulfate is dosed 104 according to the determined manganese concentration to produce a second process solution, and to precipitate at least part of manganese oxide. In a step e), the manganese oxide is filtered 105.

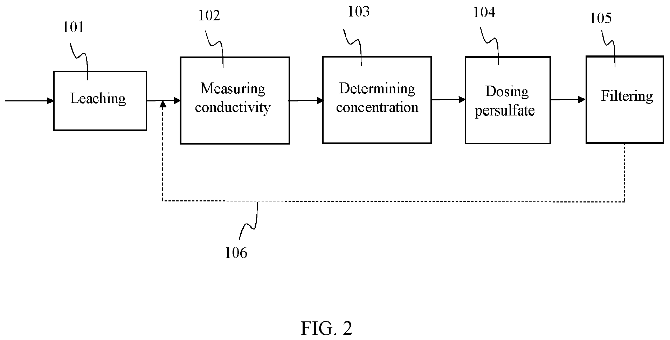

FIGURE 2 illustrates a method for processing a manganese containing material in accordance with a second embodiment. The method further comprises a step d') after the step d) in which steps b), c) and d) are repeated for a third process solution, wherein the third process solution is obtained after precipitation of the second process solution.

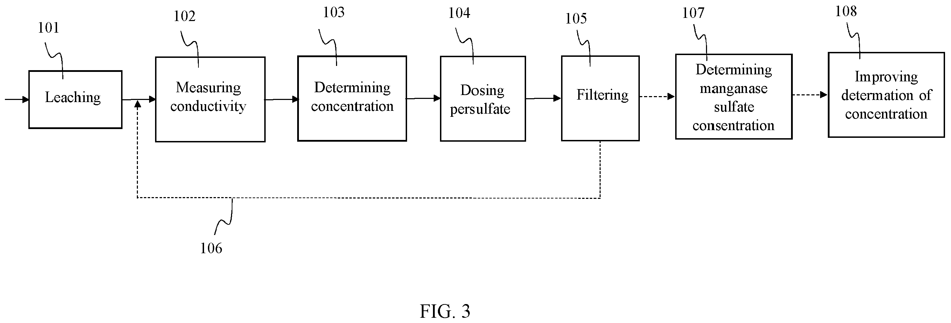

FIGURE 3 illustrates a method for processing a manganese containing material in accordance with a third embodiment. The method further comprises a step f) for determining, with an analytical method, the manganese concentration of the solution obtained after precipitation and filtering. The method further comprises improving determination of concentration of the manganese with the manganese concentration determined with the analytical method.

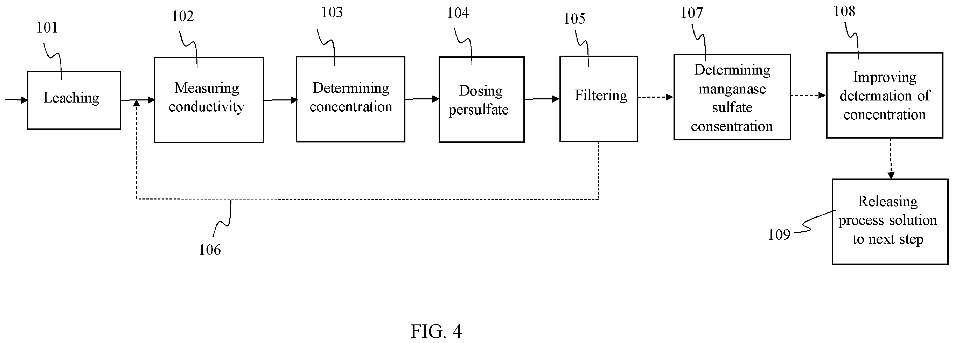

FIGURE 4 illustrates a method for processing a manganese containing material in accordance with a fourth embodiment. The method further comprises further comprising a step g) for releasing the process solution to a next step when conductivity of the solution obtained after precipitation and filtering reaches a threshold.

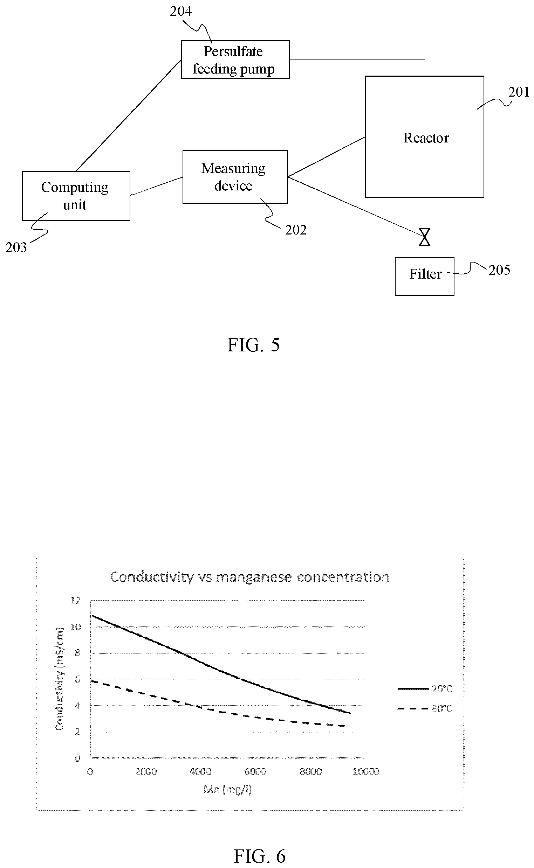

FIGURE 5 illustrates an apparatus for processing a manganese containing material. The apparatus comprises a reactor 201, a conductivity measuring device 202, a computing unit 203, a persulfate feeding pump 204 and a filter 205. The reactor 201, containing manganese containing material, sulfuric acid, and hydrogen peroxide, is configured to produce a first process solution comprising manganese sulfate. The conductivity measuring device 202 is connected to the reactor 201 and configured to measure conductivity of the first process solution. The computing unit 203 is connected to the conductivity measuring device 202 and is configured to determine concentration of manganese based on the conductivity of the first process solution. The computing unit 203 is further connected to the persulfate feeding pump 204, which is configured to dose persulfate according to the determined manganese concentration to produce a second process solution, and to precipitate at least part of manganese oxide. The conductivity measuring device 202 is connected to the filter 205 and is configured to control the filter 205, which is connected to the reactor 201. The filter 205 is configured to filter the manganese oxide.

EXAMPLES

**Example 1**

A mix of raw materials (black mass and nickel dihydroxide) containing differing amounts of manganese oxide is dissolved in a sulfuric acid and hydrogen peroxide solution. The ratio of different raw materials in the mixes is chosen so that the final total metal concentrations in the solutions are approximately 35-40 g/l. Solutions with different manganese contents are prepared. The solutions are filtered and the metal content is analysed using ICP-OES. Conductivity is measured at 80 °C and 20 °C and plotted against manganese concentration, as presented in FIGURE 6. Using the data, the slope and the intercept is calculated to give the equation:

at 20°C:

$$[Mn] = (Conductivity - 10.7009)/-0.0008$$

at 80°C:

$$[Mn] = (Conductivity - 5.6416)/-0.0004$$

This equation is then used to determine the manganese content in examples described below. It is important that temperature is measured and recorded when measuring conductivity and building the database, since increased temperature decreases conductivity.

**Example 2**

10 g of black mass with an approximate total metal content of 35%, containing nickel, cobalt, manganese and lithium, is dissolved in 100 ml 10 wt-% sulfuric acid at 80 °C and then 4 wt-% hydrogen peroxide is added. One (1) hour after addition of hydrogen peroxide, the mixture is filtered and the filtrate conductivity is measured to 3.195 mS/cm. According to the data bank, the manganese content is calculated to 10053 ppm. The metal content, measured using ICP-OES, was 10290 ppm. Hence, the conductivity measurement gives an accuracy of 97.7%.

The persulfate amount required to precipitate all manganese sulfate as manganese oxide is calculated to 46 g (molar ratio of 1:1.1). Four hours after addition of the required persulfate amount, the conductivity is measured to 9.751 mS/cm, which indicates 0 ppm Mn content according to the model. To double check the amount of manganese, the mixture is filtered and the manganese concentration is analyzed with ICP-OES to be 7 ppm, with a manganese oxide yield of 99.9%.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

**Claims**

1.   A method for processing a manganese containing material comprising:

  a) leaching the manganese containing material using sulfuric acid and hydrogen peroxide to produce a first process solution comprising manganese sulfate, which first process solution is filtrated,
  b) measuring conductivity of the first process solution at a temperature,
  c) determining concentration of manganese based on the measured conductivity of the first process solution at the temperature, and a correlation between the conductivity and the concentration,
  d) dosing persulfate according to the determined manganese concentration to produce a second process solution, and to precipitate at least part of manganese oxide, and
  e) filtering the manganese oxide, to produce a manganese depleted process liquor.

2. The method of claim 1, wherein conductivity of the first process solution is measured at temperature of 15-90 °C, preferably 70-90 °C, more preferably 75-85 °C.

3. The method of any one of the preceding claims, wherein the step d) further comprises heating the first process solution to a temperature of 70-90°C, preferably 75-85°C, before dosing the persulfate.

4. The method of any one of the preceding claims, wherein the molar ratio of the persulfate to manganese sulfate is 0.95-1.3:1, preferably 1-1.1:1.

5. The method of any one of the preceding claims, wherein the persulfate is a monoprotic persulfate.

6. The method of any one of the preceding claims, wherein the persulfate is sodium persulfate, ammonium persulfate, potassium persulfate or lithium persulfate.

7. The method of any one of the preceding claims, further comprising a step d') after the step d) in which steps b), c) and d) are repeated for a third process solution, wherein the third process solution is obtained after precipitation of the second process solution.

8. The method of any of the preceding claims, further comprising a step f) for determining, with an analytical method, the manganese concentration of the solution obtained after precipitation and filtering.

9. The method of claim 8, further comprising improving determination of concentration of the manganese with the manganese concentration determined with the online analytical method.

10. The method of any one of the preceding claims, further comprising a step g) for releasing the process solution to a next step, when conductivity of the solution obtained after precipitation and filtering reaches a threshold.

11. The method of claim 10, wherein the threshold is above 9.5 mS/cm, preferably 9.5-12 mS/cm, more preferably 9.5-11 mS/cm.

12. An apparatus for processing a manganese containing material, the apparatus comprising:

   - a reactor for containing manganese containing material, sulfuric acid and hydrogen peroxide, configured to produce a first process solution comprising manganese sulfate,
   - a conductivity measuring device configured to measure conductivity of the first process solution at a temperature,
   - a computing unit configured to determine concentration of manganese based on the conductivity of the first process solution at the temperature, and a correlation between the conductivity and the concentration,
   - a persulfate feeding pump configured to dose persulfate according to the determined manganese concentration to produce a second process solution, and to precipitate at least part of manganese oxide, and
   - a filter configured to filter the manganese oxide.

FIG. 1

101 Leaching

102 Measuring conductivity

103 Determining concentration

104 Dosing persulfate

105 Filtering

106

FIG. 2

101 102 103 104 105 107 108

| Leaching | → | Measuring conductivity | → | Determining concentration | → | Dosing persulfate | → | Filtering | ⇢ | Determining manganase sulfate consentration | ⇢ | Improving determation of concentration |

106

FIG. 3

FIG. 4

FIG. 5

FIG. 6

Europäisches
Patentamt
European
Patent Office
Office européen
des brevets

# EUROPEAN SEARCH REPORT

Application Number

EP 22 18 2104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 110 512 080 A (JINCHUAN GROUP CO LTD; LANZHOU JINCHUAN TECH PARK CO LTD) 29 November 2019 (2019-11-29) * claim 1 to 10 * * figure 1 * * example 1 to 3 * ----- | 1-12 | INV. C22B1/00 C22B3/02 C22B3/44 C22B7/00 C22B47/00 H01M10/54 |
| Y | CN 104 078 719 A (CHERY AUTOMOBILE CO LTD) 1 October 2014 (2014-10-01) * claim 1 and 2 * ----- | 1-12 | |
| A | US 2021/376399 A1 (MORIN DOMINIQUE [CA] ET AL) 2 December 2021 (2021-12-02) * paragraph [[0096]] * ----- | 1-12 | |
| A | CN 109 668 941 B (PRINCE YINUOKANG CO LTD) 3 August 2021 (2021-08-03) * the whole document * ----- | 1-12 | |
| A | CN 105 932 244 A (UNIV GUILIN TECH) 7 September 2016 (2016-09-07) * the whole document * ----- | 1-12 | **TECHNICAL FIELDS SEARCHED (IPC)** C22B H01M |
| A | CN 113 957 255 A (GUANGDONG BRUNP RECYCLING TECHNOLOGY CO LTD ET AL.) 21 January 2022 (2022-01-21) * the whole document * ----- | 1-12 | |
| A | CN 112 117 507 A (UNIV CENTRAL SOUTH) 22 December 2020 (2020-12-22) * the whole document * ----- | 1-12 | |

The present search report has been drawn up for all claims

| Place of search | Date of completion of the search | Examiner |
|---|---|---|
| The Hague | 4 November 2022 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2104

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2022

| Patent document cited in search report | | Publication date | Patent family member(s) | | Publication date |
|---|---|---|---|---|---|
| CN 110512080 | A | 29-11-2019 | NONE | | |
| CN 104078719 | A | 01-10-2014 | NONE | | |
| US 2021376399 | A1 | 02-12-2021 | CA | 3076688 A1 | 04-04-2019 |
| | | | CN | 111418110 A | 14-07-2020 |
| | | | EP | 3688834 A1 | 05-08-2020 |
| | | | JP | 2020535323 A | 03-12-2020 |
| | | | KR | 20200060464 A | 29-05-2020 |
| | | | US | 2021376399 A1 | 02-12-2021 |
| | | | WO | 2019060996 A1 | 04-04-2019 |
| CN 109668941 | B | 03-08-2021 | NONE | | |
| CN 105932244 | A | 07-09-2016 | NONE | | |
| CN 113957255 | A | 21-01-2022 | NONE | | |
| CN 112117507 | A | 22-12-2020 | NONE | | |

EPO FORM P0459

For more details about this annex : see Official Journal of the European Patent Office, No. 12/82

**EP 4 299 773 A1**

**REFERENCES CITED IN THE DESCRIPTION**

**Patent documents cited in the description**

- CN 111092195 A
- CN 112897584 A
- CN 109668941 A